# EUROPÄISCHE PATENTANMELDUNG

(11) **EP 4 442 638 A1**
(43) Veröffentlichungstag der Anmeldung: **09.10.2024**
(21) Anmeldenummer: 24000036.4
(22) Anmeldetag: 21.03.2024
(51) Int. Cl.: B67D 7/02, B62D 65/00, B67D 7/04, B67D 7/06, B67D 7/32, G05B 19/00, B60T 17/22

(54) **VERFAHREN UND VORRICHTUNG ZUR BEFÜLLUNG VON BEHÄLTERN UND KREISLÄUFEN VON FAHRZEUGEN MIT FLÜSSIGEN BETRIEBSSTOFFEN**

(30) Priorität: 04.04.2023 DE 102023001333
(71) Anmelder: Dürr Somac GmbH, 09366 Stollberg (DE)
(72) Erfinder: Wieland, Frank, 09235 Burkhardtsdorf OT Eibenberg (DE); Ullmann, Christian, 08297 Zwönitz (DE)
(74) Vertreter: Findeisen Neumann Scheit Partnerschaft mbB

(57) **Zusammenfassung**

Die Erfindung betrifft eine technische Lösung zur Befüllung von Behältern und Kreisläufen von Fahrzeugen mit mindestens einem flüssigen Betriebsstoff mit Hilfe einer Befüllanlage, die mindestens eine Konsole mit mindestens einem Befülladapter aufweist und wobei der mindestens eine Betriebsstoff mit dem mindestens einen Befülladapter in die zu befüllenden Behälter und Kreisläufe eingespeist wird. Aufgabe der Erfindung ist es, den für eine Befüllung notwendigen Hauptprozess und die für eine Befüllung ebenfalls notwendigen Nebenprozesse sowohl verfahrenstechnisch als auch gerätetechnisch so zu gestalten, dass insbesondere bei einem gleichzeitigen Betrieb von mehreren Konsolen eine funktionell sichere Betriebsweise für die gesamte Befüllanlage erreicht wird. Die Aufgabe wird verfahrenstechnisch gelöst, indem in der Konsole (2) mehrere Verfahrensschritte zum Drucktest und/oder zum Evakuieren und/oder zum Füllen und/oder zum Schutz einer Vakuumpumpe (5) und/oder zur Aufnahme von Gasen für einen Druckabbau und/oder zur Aufnahme von Flüssigkeiten für ein Rücksaugen durchgeführt werden. Vorrichtungstechnisch wird die Aufgabe gelöst, indem in der Konsole (2) ein Abscheider (4), eine Vakuumpumpe 5, eine erste Baugruppe (6) zur Steuerung der Verfahrensschritte zum Entleeren des Abscheiders (4) und/oder eine zweite Baugruppe (7) zur Steuerung einer Vakuumbeaufschlagung und/oder einem Einfüllen von Flüssigkeiten und/oder einem Rücksaugen oder Belüften und/oder einer hydraulischen Versorgung des Befülladapters (3) und/oder eine dritte Baugruppe (8) für die pneumatische und elektrische Ansteuerung des Befülladapters (3) angeordnet sind. **(Fig. 5)**

## Beschreibung

Die Erfindung betrifft eine technische Lösung zur Befüllung von Behältern und Kreisläufen von Fahrzeugen mit mindestens einem flüssigen Betriebsstoff mit Hilfe einer Befüllanlage, die mindestens eine Konsole mit mindestens einem Befülladapter aufweist und wobei der mindestens eine Betriebsstoff mit dem mindestens einen Befülladapter in die zu befüllenden Behälter und Kreisläufe eingespeist wird.

Für zahlreiche technische Anwendungen müssen Flüssigkeiten und/oder Gase zeitlich und mengenmäßig definiert einer gerätetechnischen Anordnung zugeführt werden. Ein typisches Anwendungsgebiet ist die Automobilindustrie. Dabei müssen die neugefertigten Fahrzeuge im Herstellungsprozess mit unterschiedlichen flüssigen Betriebsstoffen befüllt werden, zum Beispiel mit Bremsflüssigkeit, Kühlflüssigkeit, (Servo)Öl, Scheibenreiniger, Kraftstoff und dergleichen. Die Betriebsstoffe werden überwiegend an den Montagelinien in weitgehend automatisierten Prozessen mittels einer Befüllanlage in die jeweiligen Behälter und Kreisläufe der Fahrzeuge eingespeist.

Für die Befüllung muss ein Werker in Abhängigkeit der Position der Befüllanlage zunächst mindestens einen Befülladapter zum Fahrzeug bringen und dort am Anschluss der konkret zu befüllenden Behälter oder Kreisläufe anschließen. Der Befülladapter steht mit Schläuchen zur Zuführung des jeweiligen Betriebsstoffes in Wirkverbindung und wird während der Befüllung über zugeordnete Spannelemente temporär mit dem zu befüllenden Behälter oder Kreislauf verbunden. Während der Befüllung fährt die Befüllanlage mit dem verbundenen Fahrzeug mit, wobei sich die Befüllanlage mit der gleichen Geschwindigkeit bewegt wie die Montagelinie. Dieser grundlegende Funktionsablauf ist aus US 2003 016 4200 A1 bekannt. Alternativ kann anstelle einer manuellen Handhabung auch eine automatisierte Handhabung der Befülladapter realisiert werden. Eine derartige Variante mit einem Industrieroboter wird in DE 10 2009 020 312 A1 beschrieben.

Unabhängig von ihrer konkreten Ausgestaltung weisen die Befüllanlagen an Montagelinien üblicherweise eine Grundeinheit und eine oftmals verfahrbare Konsole mit Befülladaptern auf. Die Grundeinheit ist für eine Bereitstellung der in das Fahrzeug zu befüllenden Betriebsstoffe und für verschiedene Nebenprozesse ausgestaltet. Eine Grundeinheit kann dabei bis zu zwei Konsolen bedienen. Die Konsole ist überwiegend neben der Montagelinie angeordnet und fährt synchron zu dem zu befüllenden Fahrzeug mit. In dieser Konsole sind alle Baugruppen angeordnet, von denen die Qualität und Schnelligkeit der eigentlichen Befüllung als Hauptprozess abhängig ist. Außerdem ist die Konsole ebenfalls für verschiedene Nebenprozesse ausgestaltet.

Die somit realisierte Aufteilung von Verfahrensschritten einiger Nebenprozesse in die Grundeinheit und in die Konsole ergibt zwangsläufig Nachteile. So sind die Prozessqualität und die Prozessgeschwindigkeit der Befüllung von Leitungslängen und vom Anlagenaufbau abhängig. Weiterhin können sich funktionelle Probleme beim gleichzeitigen Betrieb mehrerer Konsolen ergeben, weil sich die jeweils separaten Konsolen gegenseitig beeinflussen.

Aufgabe der Erfindung ist es, den für eine Befüllung notwendigen Hauptprozess und die für eine Befüllung ebenfalls notwendigen Nebenprozesse sowohl verfahrenstechnisch als auch gerätetechnisch so zu gestalten, dass insbesondere bei einem gleichzeitigen Betrieb von mehreren Konsolen eine funktionell sichere Betriebsweise für die gesamte Befüllanlage erreicht wird.

Als Hauptprozess werden im Rahmen der vorliegenden Erfindung die Verfahrensschritte im Zusammenhang mit einer Vakuumbeaufschlagung, dem Einfüllen von Flüssigkeiten sowie dem Rücksaugen oder Belüften verstanden. Dabei werden als Vakuum alle Drücke in einem Druckbereich von 0 bis 1.000 mbar absolut verstanden. Als Nebenprozess werden im Rahmen der vorliegenden Erfindung insbesondere Schritte zum Entleeren des Abscheiders verstanden.

Die Aufgabe wird verfahrenstechnisch gelöst, indem in der Konsole mehrere Verfahrensschritte zum Drucktest und/oder zum Evakuieren und/oder zum Füllen und/oder zum Schutz einer Vakuumpumpe und/oder zur Aufnahme von Gasen für einen Druckabbau und/oder zur Aufnahme von Flüssigkeiten für ein Rücksaugen durchgeführt werden.

Eine Ausgestaltung sieht vor, dass Verfahrensschritte zum Schutz einer Vakuumpumpe, zur Aufnahme von Gasen für einen Druckabbau und/oder zur Aufnahme von Flüssigkeiten für ein Rücksaugen in einer gemeinsamen Funktionsgruppe der Konsole durchgeführt werden.

Eine weitere Ausgestaltung sieht vor, dass in der Konsole Verfahrensschritte für das Entleeren des Abscheiders, für die Steuerung der Vakuumbeaufschlagung, für das Einfüllen von Flüssigkeiten, für das Rücksaugen oder Belüften, für die hydraulische Versorgung des Befülladapters sowie für die pneumatische und elektrische Ansteuerung des Befülladapters durchgeführt werden.

Eine weitere Ausgestaltung sieht vor, dass Verfahrensschritte zum Entleeren des Abscheiders und/oder einer Steuerung der Vakuumbeaufschlagung und/oder einem Einfüllen von Flüssigkeiten und/oder einem Rücksaugen oder Belüften und/oder einer hydraulischen Versorgung des Befülladapters sowie einer pneumatischen und/oder elektrischen Ansteuerung des Befülladapters in jeweils separaten Funktionsgruppen der Konsole durchgeführt werden.

Eine weitere Ausgestaltung sieht vor, dass in der Grundeinheit der Verfahrensschritt für eine Bereitstellung der flüssigen Betriebsstoffe für den Befüllvorgang durchgeführt wird und dass mehrere andere für den Befüllvorgang notwendige Verfahrensschritte in der Konsole durchgeführt werden.

Die Aufgabe wird vorrichtungstechnisch gelöst, indem in der Konsole ein Abscheider, eine Vakuumpumpe, eine erste Baugruppe zur Steuerung der Verfahrensschritte zum Entleeren des Abscheiders und/oder eine zweite Baugruppe zur Steuerung einer Vakuumbeaufschlagung und/oder einem Einfüllen von Flüssigkeiten und/oder einem Rücksaugen oder Belüften und/oder einer hydraulischen Versorgung des Befülladapters und/oder eine dritte Baugruppe für die pneumatische und elektrische Ansteuerung des Befülladapters angeordnet sind.

Eine Ausgestaltung sieht vor, dass die erste Baugruppe mit dem Abscheider und mit der zweiten Baugruppe pneumatisch und/oder hydraulisch verbunden ist, dass die zweite Baugruppe mit der Vakuumpumpe und der dritten Baugruppe pneumatisch und/oder hydraulisch verbunden ist und dass die dritte Baugruppe mit dem Befülladapter pneumatisch und/oder elektrisch verbunden ist.

Eine Ausgestaltung sieht vor, dass der Abscheider, die Vakuumpumpe, die erste Baugruppe und/oder die zweite Baugruppe und/oder die dritte Baugruppe innerhalb eines gemeinsamen Gehäuses baulich integriert sind.

Der grundlegende Lösungsansatz besteht demzufolge darin, möglichst viele Prozessschritte in die Konsole zu verlegen. Die Grundeinheit kann somit beispielsweise lediglich zur Medienversorgung mit den notwendigen Betriebsstoffen verwendet werden. Als wesentliche Baugruppe weist die Konsole einen Abscheider auf, der zum Schutz der Vakuumpumpe, zur Aufnahme von Gasen (Druckabbau) und zur Aufnahme von Flüssigkeiten (Rücksaugen) konzipiert ist.

Eine Ausgestaltung sieht vor, dass der Abscheider als ein druckfester Behälter ausgestaltet ist und ein Abscheideteil mit einem Reservoir aufweist, wobei am Abscheideteil ein tangentialer Eingang und ein mittiger Ausgang sowie am Reservoir ein unterer Ausgang für die abgeschiedene Flüssigkeit ausgestaltet sind und wobei das Reservoir mit einer Füllstandüberwachung ausgestattet und durch ein zusätzliches Reservoir erweiterbar ist.

Der Abscheider trennt Flüssigkeit vom Gasstrom in Richtung der Vakuumpumpe. Weiterhin glättet der Abscheider Druckspitzen und schützt somit die Vakuumpumpe. Außerdem wird der Abscheider auch als ein Vakuumreservoir (Puffer) genutzt, um die Vakuumpumpe während des Rücksaugprozesses zu schützen. In diesem Betriebszustand läuft die Vakuumpumpe zwar weiter, sie ist jedoch vom übrigen Strömungsweg abgetrennt. Mit dem Abscheider ist ferner am Anfang eines Prozesses auch kurzzeitig eine sehr hohe Vakuumleistung verfügbar. Diese kann beispielsweise vorteilhaft genutzt werden als Impuls zum Druckabbau für einen Reinigungsprozess zum Spülen den Leitungen.

Somit werden die Gase und Flüssigkeiten im Unterschied zu bisher üblichen Befüllanlagen überwiegend nicht mehr von der Grundeinheit übernommen, sondern vom Abscheider. Dadurch sind die Prozessqualität und Prozessgeschwindigkeit der Befüllung nicht mehr von Leitungslängen und vom Anlagenaufbau abhängig.

Durch die erfindungsgemäße technische Lösung werden nunmehr der für eine Befüllung notwendige Hauptprozess und die für eine Befüllung ebenfalls notwendigen Nebenprozesse so gestaltet, dass insbesondere beim gleichzeitigen Betrieb von mehreren Konsolen eine funktionell sichere Betriebsweise für die gesamte Befüllanlage erreicht wird. Dies beruht insbesondere darauf, dass die separaten Konsolen funktionell weitgehend autark sind. Somit ist es ausgeschlossen, dass sich mehrere Konsolen gegenseitig ungewollt beeinflussen können, weil die Durchführung der wesentlichen Prozessschritte (anders als bisher) nicht von einer gemeinsamen Grundeinheit veranlasst wird.

Als weitere Vorteile sind insbesondere zu nennen:
- gleichbleibende Prozessparameter bzw. Prozesswerte werden gewährleistet
- teilweise werden auch bessere Prozesswerte erreicht (Druckabbauzeit, Rücksaugzeit, Schnüffelleistung)
- eine Versorgung von mehreren Konsolen pro Grundeinheit ist möglich
- in den Konsolen laufen voneinander unabhängige Prozesse ab
- durch die unabhängige Prozessführung wirken sich Leistungseinbrüche von einzelnen Komponenten nicht auf die anderen Konsolen aus
- eine Kosteneinsparung ergibt sich für die Grundeinheit durch Wegfall der Vakuumpumpe

Nachfolgend werden Ausführungsbeispiele der Erfindung anhand der Zeichnung erläutert. Es zeigen in jeweils stilisierter Darstellung:
- Fig. 1: eine erfindungsgemäße Ausführung mit einer Grundeinheit und einer separaten Konsole
- Fig. 2: eine alternative erfindungsgemäße Ausführung mit einer Grundeinheit und einer separaten Konsole
- Fig. 3: eine erfindungsgemäße Ausführung mit einer festen Grundeinheit und einer integrierten Konsole
- Fig. 4: eine alternative erfindungsgemäße Ausführung mit einer festen Grundeinheit und einer integrierten Konsole
- Fig. 5: eine erfindungsgemäße Ausführung einer Konsole ohne Grundeinheit mit Medienversorgung über das Kundennetz (Zentralversorgung)
- Fig. 6: eine alternative erfindungsgemäße Ausführung einer Konsole ohne Grundeinheit mit Medienversorgung über das Kundennetz (Zentralversorgung)
- Fig. 7: den Aufbau eines Abscheiders für die erfindungsgemäße technische Lösung
- Fig. 8: den Verfahrensablauf für eine konkrete Anwendung der erfindungsgemäßen technischen Lösung

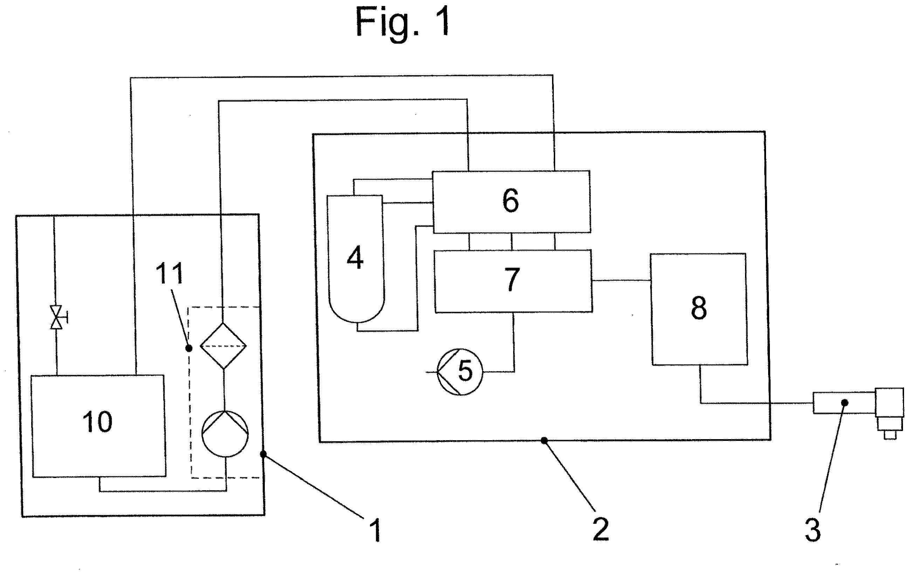

Aus **Fig. 1** ist der grundsätzliche Aufbau einer erfindungsgemäß ausgeführten Befüllanlage zur Befüllung von Behältern und Kreisläufen von Fahrzeugen (nicht dargestellt) mit flüssigen Betriebsstoffen (z.B. Bremsflüssigkeit, Kühlflüssigkeit, (Servo)ÖI, Wischwasser usw.) an Montagelinien der Automobilindustrie (nicht dargestellt) ersichtlich. Demzufolge weist die Befüllanlage eine Grundeinheit 1 und mindestens eine Konsole 2 mit mindestens einem Befülladapter 3 auf. Dabei ist die Konsole 2 in Abhängigkeit der jeweils konkreten Einsatzbedingungen entweder verfahrbar oder fest installiert. Die Betriebsstoffe werden mit dem Befülladapter 3 in die zu befüllenden Behälter und Kreisläufe eingespeist.

In der Grundeinheit 1 sind ein Tank 10 und eine beispielsweise mit einer Füllpumpe und einem Filter ausgebildete Füllstrecke 11 angeordnet. Bei der hier dargestellten Ausführung sind in der Konsole 2 ein Abscheider 4, eine Vakuumpumpe 5, eine erste Baugruppe 6 zur Steuerung der Verfahrensschritte zum Entleeren des Abscheiders 4, eine zweite Baugruppe 7 zur Steuerung einer Vakuumbeaufschlagung und/oder einem Einfüllen von Flüssigkeiten und/oder einem Rücksaugen oder Belüften und/oder einer hydraulischen Versorgung des Befülladapters 3 und eine dritte Baugruppe 8 für die pneumatische und elektrische Ansteuerung des Befülladapters 3 angeordnet.

Die Wirkverbindungen zwischen den Baugruppen sind in der Darstellung stilisiert dargestellt. Demzufolge ist der Tank 10 mit der Füllstrecke 11 und mit der ersten Baugruppe 6 verbunden. Die Füllstrecke 11 ist ebenfalls mit der ersten Baugruppe 6 verbunden. Die erste Baugruppe 6 ist weiterhin mit dem Abscheider 4 und der zweiten Baugruppe 7 verbunden. Die zweite Baugruppe 7 ist weiterhin mit der Vakuumpumpe 5 und der dritten Baugruppe 8 verbunden. Die dritte Baugruppe 8 ist weiterhin mit dem Befülladapter 3 verbunden.

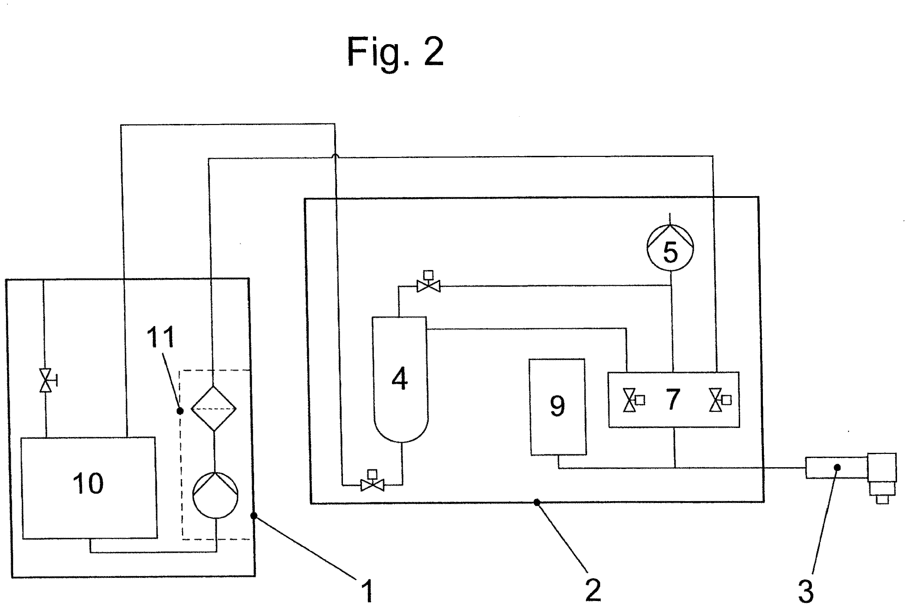

**Fig. 2** zeigt im Unterschied zu der erfindungsgemäß ausgeführten Befüllanlage gemäß Fig. 1 den Aufbau einer alternativen erfindungsgemäßen Befüllanlage.

Auch hier sind in der Grundeinheit 1 ein Tank 10 und eine mit einer Füllpumpe und einem Filter ausgebildete Füllstrecke 11 angeordnet. Ebenso sind in der Konsole 2 ein Abscheider 4, eine Vakuumpumpe 5 und eine zweite Baugruppe 7 angeordnet. Allerdings sind hier in der Konsole 2 keine erste Baugruppe 6 und keine dritte Baugruppe 8 angeordnet. Stattdessen ist die Konsole mit einer Ventilinsel 9 zur Steuerung pneumatischer und elektrischer Aktoren und Sensoren in der Konsole 2 und im Befülladapter 3 ausgestattet.

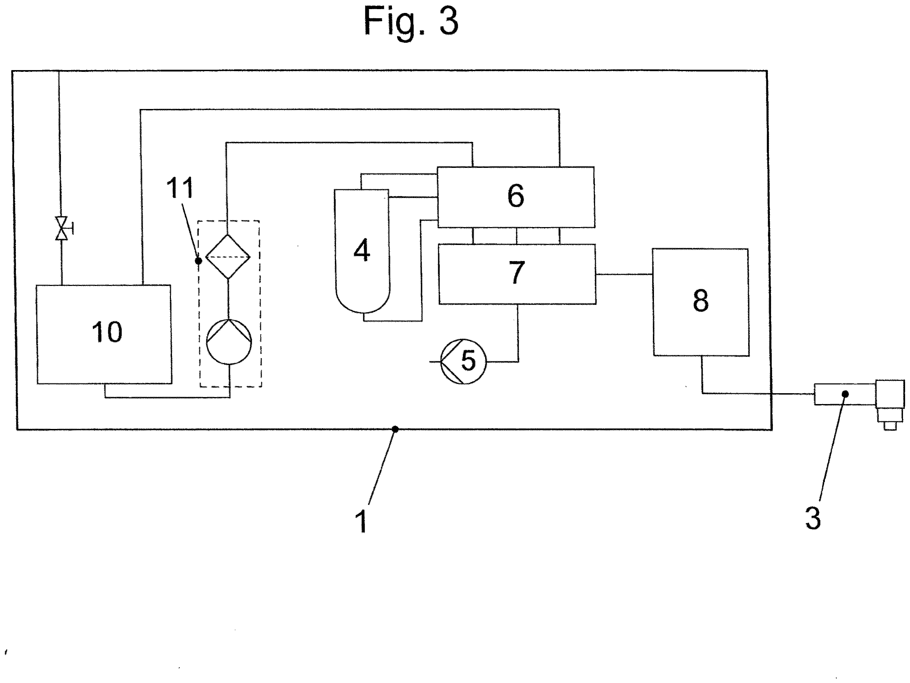

Aus **Fig. 3** ist der grundsätzliche Aufbau einer erfindungsgemäß ausgeführten Befüllanlage mit einer festen Grundeinheit 1 und einer integrierten Konsole 2 ersichtlich. Die hierbei verwendeten Baugruppen und deren funktionelle Wirkverbindung entsprechen der in Fig. 1 dargestellten Ausführung. Im Unterschied zu Fig. 1 sind mit Ausnahme des Befülladapters 3 jedoch alle Baugruppen innerhalb eines gemeinsamen Gehäuses baulich integriert.

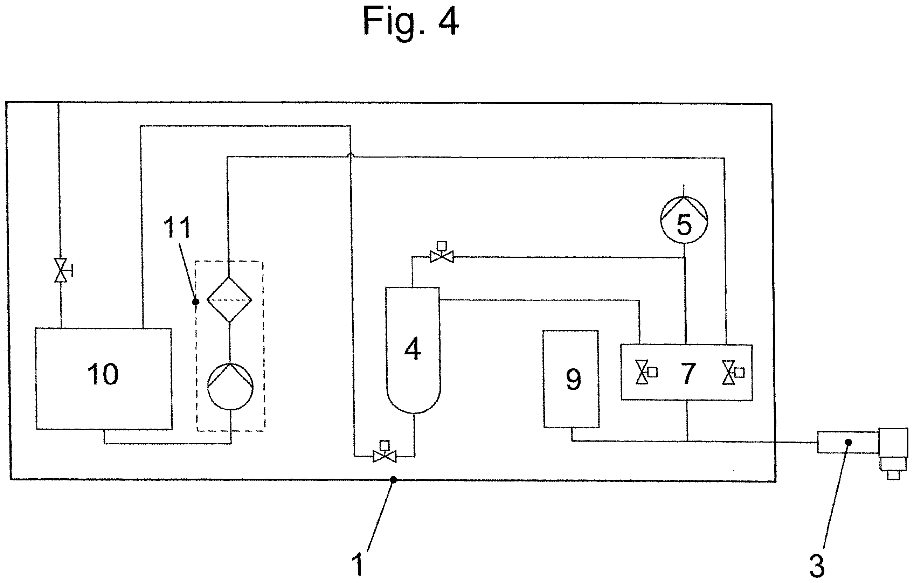

**Fig. 4** zeigt im Unterschied zu der erfindungsgemäß ausgeführten Befüllanlage gemäß Fig. 3 den Aufbau einer alternativen erfindungsgemäßen Befüllanlage. Die hierbei verwendeten Baugruppen und deren funktionelle Wirkverbindung entsprechen der in Fig. 2 dargestellten Ausführung. Im Unterschied zu Fig. 2 sind mit Ausnahme des Befülladapters 3 jedoch alle Baugruppen innerhalb eines gemeinsamen Gehäuses baulich integriert.

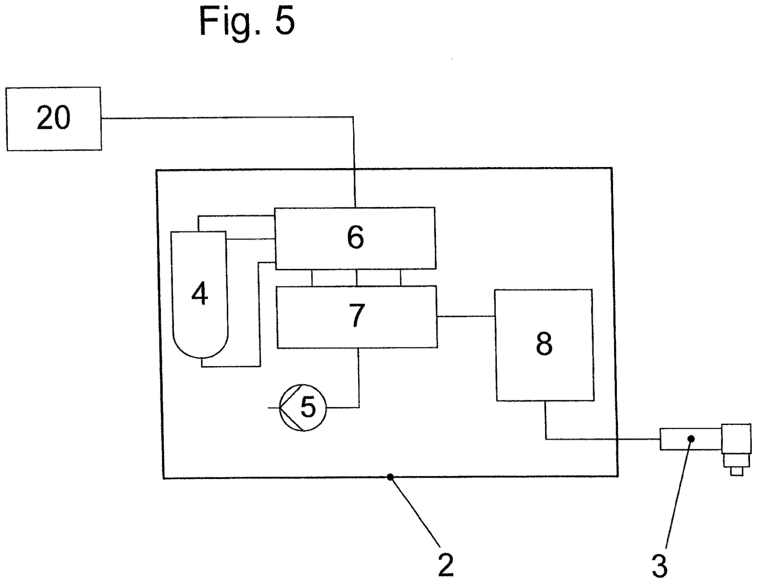

Aus **Fig. 5** ist nochmals der grundsätzliche Aufbau einer erfindungsgemäß ausgeführten Konsole 2 ersichtlich. Dabei ist die Konsole 2 in Abhängigkeit der jeweils konkreten Einsatzbedingungen entweder verfahrbar oder fest installiert. Die Betriebsstoffe werden mit dem Befülladapter 3 in die zu befüllenden Behälter und Kreisläufe eingespeist. Die Medienversorgung erfolgt über das Kundennetz (Zentralversorgung), damit kann die Grundeinheit entfallen.

In der Konsole 2 sind ein Abscheider 4, eine Vakuumpumpe 5, eine erste Baugruppe 6, eine zweite Baugruppe 7 sowie eine dritte Baugruppe 8 angeordnet.

Der Abscheider 4 ist mit der ersten Baugruppe 6 verbunden. Die erste Baugruppe 6 ist weiterhin mit der zweiten Baugruppe 7 verbunden. Die zweite Baugruppe 7 ist weiterhin mit der Vakuumpumpe 5 und mit der dritten Baugruppe 8 verbunden. Die dritte Baugruppe 8 ist auch mit dem Befülladapter 3 verbunden. Die Konsole 2 wird über eine Medieneinspeisung 20 mit dem Kundennetz (Zentralversorgung) verbunden.

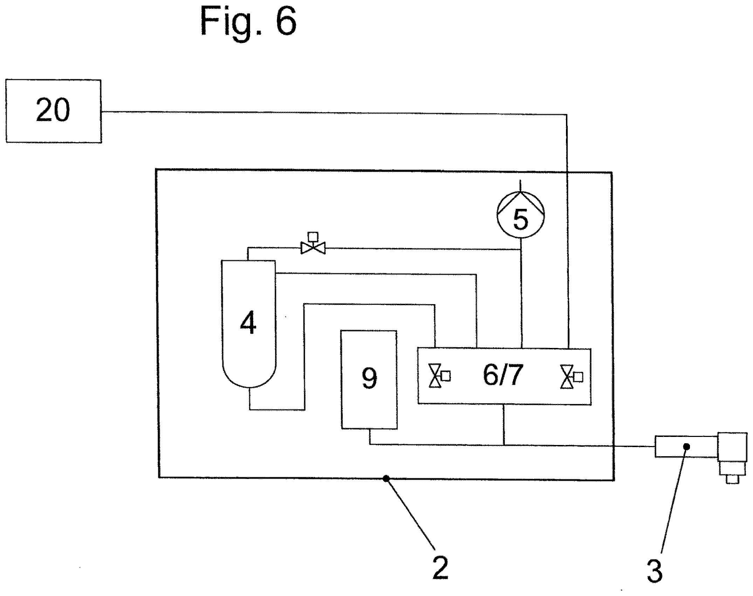

**Fig. 6** zeigt im Unterschied zu einer erfindungsgemäß ausgeführten Konsole 2 gemäß Fig. 5 den Aufbau einer alternativen erfindungsgemäßen Konsole 2. Die hierbei verwendeten Baugruppen und deren funktionelle Wirkverbindung entsprechen weitgehend der in Fig. 2 dargestellten Ausführung, wobei die zweite Baugruppe 7 hier jedoch mit einer ersten Baugruppe 6 kombiniert worden ist. Die Konsole 2 wird ebenfalls über eine Medieneinspeisung 20 mit dem Kundennetz (Zentralversorgung) verbunden.

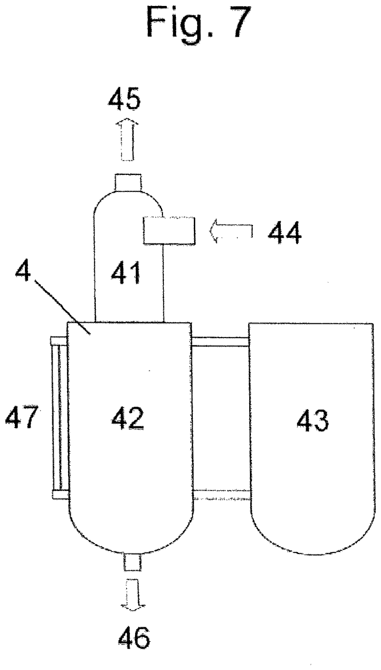

Aus **Fig. 7** ist der Aufbau eines Abscheiders 4 zur Nutzung in einer erfindungsgemäßen Konsole 2 einer Befüllanlage ersichtlich. Demzufolge ist der Abscheider 4 als ein druckfester Behälter ausgestaltet und besteht aus einem Abscheideteil 41 mit einem Reservoir 42. Das Abscheideteil 41 weist einen tangentialen Eingang 44 und einen mittigen Ausgang 45 nach oben auf. Das Reservoir 42 weist einen unteren Ausgang 46 für die abgeschiedene Flüssigkeit auf. Das Reservoir 42 ist mit einer Füllstandüberwachung 47 ausgestattet. Das Aufnahmevolumen des Reservoirs 42 kann mit Hilfe von Verbindungsleitungen optional durch ein zusätzliches Reservoir 43 erweitert werden.

Mit einem derart aufgebauten Abscheider wird folgender Funktionsablauf realisiert:
Das jeweilige Medium (Luft oder Flüssigkeit oder Gemisch aus beiden) strömt über den Eingang 44 tangential in den Abscheideteil 41 ein, so dass ein Zyklonprinzip realisiert wird. Die dabei im Abscheideteil 41 abgeschiedene Flüssigkeit wird im Reservoir 42 gesammelt. Das Reservoir 42 kann in Abhängigkeit der konkreten Einsatzbedingungen unterschiedliche Volumina aufweisen, wobei dieses Volumen durch das externe Volumen des zusätzlichen Reservoirs 43 erweitert werden kann. Mit der Füllstandüberwachung 47 kann der Füllstand im Reservoir 42 bzw. 42 und 43 überwacht werden. Dies kann beispielsweise einstufig oder mehrstufig oder stufenlos realisiert werden.

Die abgeschiedene Flüssigkeit wird innerhalb des Prozesses regelmäßig über den unteren Ausgang 46 am Reservoir 42 entleert. Dies kann durch Überdruck im Abscheider 4, durch Abpumpen oder auch einen Unterdruck auf der Gegenseite geschehen. Der Druck im Abscheider 4 kann zur Prozesssteuerung ständig überwacht werden. Alternativ kann die Prozesssteuerung aber auch als reine Zeitsteuerung ausgeführt werden. Um die Abscheideleistung weiter zu verbessern, kann dem Abscheider 4 auch ein Filterelement nachgeschaltet werden, wobei eine derartige Variante in der Zeichnung nicht dargestellt ist.

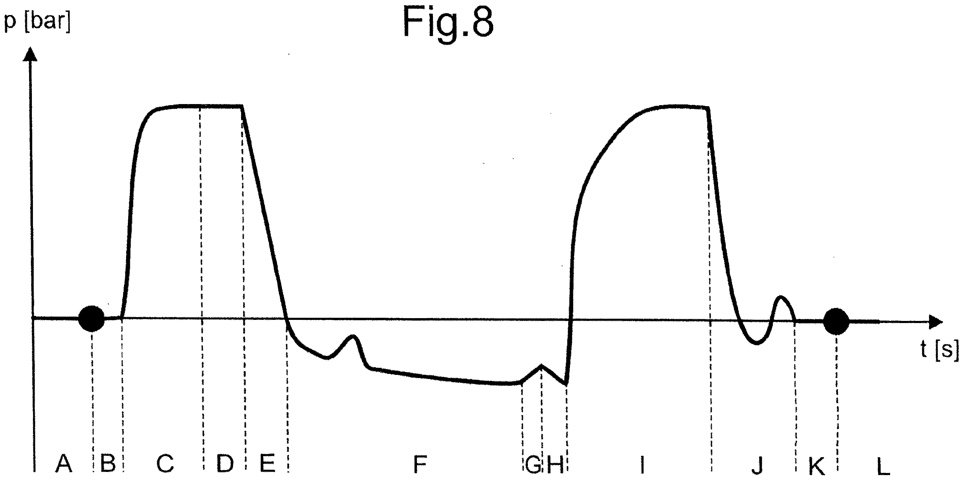

In **Fig. 8** ist beispielhaft der Verfahrensablauf beim Einsatz einer erfindungsgemäßen technischen Lösung zur Befüllung eines Kreislaufs eines Fahrzeuges mit Bremsflüssigkeit durch einen Befülladapter 3 anhand eines Zeit-Druck-Diagrammes (Zeit t [s] und Druck p [bar]) dargestellt. Dabei sind die zeitlich aufeinanderfolgenden Verfahrensschritte einer Bremsenbefüllung mit folgenden Buchstaben gekennzeichnet:
- A: Befülladapter aus der Ablage entnehmen sowie Schnüffeln
- B: Befülladapter aufsetzen und spannen
- C: Druckaufbau (Option Drucktest)
- D: Drucktest (Option Drucktest)
- E: Druckabbau (Option Drucktest)
- F: Evakuieren
- G: Vakuumlecktest
- H: Nachevakuieren
- I: Befüllen
- J: Rücksaugen auf Befüllniveau
- K: Befülladapter entspannen und abnehmen sowie Schnüffeln
- L: Befülladapter in Ablage ablegen

Mit einem derartigen Verfahrensablauf unter Verwendung einer erfindungsgemäßen technischen Lösung wird als wesentlicher Vorteil ein deutlich schnellerer Druckabbau mit der Option eines Drucktests erreicht. Ein weiterer Vorteil besteht darin, dass ein Rücksaugen schneller möglich ist und außerdem genauer und gleichmäßiger als mit den bisher üblichen Lösungen. Ein weiterer Vorteil ist zudem, dass ein Schnüffeln mit sehr hoher Leistung möglich ist, ohne eine Gefahr des Tropfens.

### Bezugszeichenliste

- 1: Grundeinheit
- 2: Konsole
- 3: Befülladapter

- 4: Abscheider
- 41: Abscheideteil
- 42: Reservoir
- 43: optionale Erweiterung Reservoir
- 44: tangentialer Eingang
- 45: mittiger Ausgang
- 46: Ausgang abgeschiedene Flüssigkeit
- 47: Füllstandüberwachung

- 5: Vakuumpumpe
- 6: erste Baugruppe
- 7: zweite Baugruppe
- 8: dritte Baugruppe
- 9: Ventilinsel zur Steuerung von Aktoren und Sensoren in Konsole und Befülladapter
- 10: Tank in Grundeinheit
- 11: Füllstrecke in Grundeinheit
- 20: Medieneinspeisung

- A - L: Prozessschritte einer Bremsenbefüllung

## Patentansprüche

1. Verfahren zur Befüllung von Behältern und Kreisläufen von Fahrzeugen mit mindestens einem flüssigen Betriebsstoff mit Hilfe einer Befüllanlage, die mindestens eine Konsole mit mindestens einem Befülladapter aufweist und wobei der mindestens eine Betriebsstoff mit dem mindestens einen Befülladapter in die zu befüllenden Behälter und Kreisläufe eingespeist wird, **dadurch gekennzeichnet,**
**dass** in der Konsole (2) mehrere Verfahrensschritte zum Drucktest und/oder zum Evakuieren und/oder zum Füllen und/oder zum Schutz einer Vakuumpumpe (5) und/oder zur Aufnahme von Gasen für einen Druckabbau und/oder zur Aufnahme von Flüssigkeiten für ein Rücksaugen durchgeführt werden.

2. Verfahren nach Anspruch 1, **dadurch gekennzeichnet,**
**dass** Verfahrensschritte zum Schutz einer Vakuumpumpe (5), zur Aufnahme von Gasen für einen Druckabbau und/oder zur Aufnahme von Flüssigkeiten für ein Rücksaugen in einer gemeinsamen Funktionsgruppe der Konsole (2) durchgeführt werden.

3. Verfahren nach einem der Ansprüche 1 oder 2, **dadurch gekennzeichnet,**
**dass** in der Konsole (2) Verfahrensschritte für das Entleeren des Abscheiders (4), für die Steuerung der Vakuumbeaufschlagung, für das Einfüllen von Flüssigkeiten, für das Rücksaugen oder Belüften, für die hydraulische Versorgung des Befülladapters (3) sowie für die pneumatische und elektrische Ansteuerung des Befülladapters (3) durchgeführt werden.

4. Verfahren nach einem der Ansprüche 1 bis 3, **dadurch gekennzeichnet,**
**dass** Verfahrensschritte zum Entleeren des Abscheiders und/oder einer Steuerung der Vakuumbeaufschlagung und/oder einem Einfüllen von Flüssigkeiten und/oder einem Rücksaugen oder Belüften und/oder einer hydraulischen Versorgung des Befülladapters (3) sowie einer pneumatischen und/oder elektrischen Ansteuerung des Befülladapters (3) in jeweils separaten Funktionsgruppen der Konsole (2) durchgeführt werden.

5. Verfahren nach Anspruch 1, **dadurch gekennzeichnet,**
**dass** in der Grundeinheit (1) der Verfahrensschritt für eine Bereitstellung der flüssigen Betriebsstoffe für den Befüllvorgang durchgeführt wird und dass mehrere andere für den Befüllvorgang notwendige Verfahrensschritte in der Konsole (2) durchgeführt werden.

6. Befüllanlage, insbesondere zur Durchführung eines Verfahrens nach einem der Ansprüche 1 bis 5 zur Befüllung von Behältern und Kreisläufen von Fahrzeugen mit mindestens einem flüssigen Betriebsstoff, die mindestens eine Konsole (2) mit mindestens einem Befülladapter (3) aufweist, wobei der mindestens eine Betriebsstoff mit dem mindestens einen Befülladapter (3) in die zu befüllenden Behälter und Kreisläufe eingespeist wird und wobei in der Konsole (2) mehrere Verfahrensschritte zum Drucktest und/oder zum Evakuieren und/oder zum Füllen und/oder zum Schutz einer Vakuumpumpe (5) und/oder zur Aufnahme von Gasen für einen Druckabbau und/oder zur Aufnahme von Flüssigkeiten für ein Rücksaugen durchgeführt werden, **dadurch gekennzeichnet,**
**dass** in der Konsole (2) ein Abscheider (4), eine Vakuumpumpe 5, eine erste Baugruppe (6) zur Steuerung der Verfahrensschritte zum Entleeren des Abscheiders (4) und/oder eine zweite Baugruppe (7) zur Steuerung einer Vakuumbeaufschlagung und/oder einem Einfüllen von Flüssigkeiten und/oder einem Rücksaugen oder Belüften und/oder einer hydraulischen Versorgung des Befülladapters (3) und/oder eine dritte Baugruppe (8) für die pneumatische und elektrische Ansteuerung des Befülladapters (3) angeordnet sind.

7. Befüllanlage nach Anspruch 6, **dadurch gekennzeichnet,**
**dass** die erste Baugruppe (6) mit dem Abscheider (4) und mit der zweiten Baugruppe (7) pneumatisch und/oder hydraulisch verbunden ist, dass die zweite Baugruppe (7) mit der Vakuumpumpe (5) und der dritten Baugruppe (8) pneumatisch und/oder hydraulisch verbunden ist und dass die dritte Baugruppe (8) mit dem Befülladapter (3) pneumatisch und/oder elektrisch verbunden ist.

8. Befüllanlage nach einem der Ansprüche 6 oder 7, **dadurch gekennzeichnet,**
**dass** der Abscheider (4), die Vakuumpumpe (5), die erste Baugruppe (6) und/oder die zweite Baugruppe (7) und/oder die dritte Baugruppe (8) innerhalb eines gemeinsamen Gehäuses baulich integriert sind.

9. Befüllanlage nach einem der Ansprüche 6 bis 8, **dadurch gekennzeichnet,**
**dass** der Abscheider (4) dafür ausgestaltet ist, um Flüssigkeit vom Gasstrom in Richtung der Vakuumpumpe (5) zu trennen, um Druckspitzen vor der Vakuumpumpe (5) zu glätten und um als Vakuumreservoir während des Rücksaugens verfügbar zu sein.

10. Befüllanlage nach einem der Ansprüche 6 bis 9, **dadurch gekennzeichnet,**
**dass** der Abscheider (4) als ein druckfester Behälter ausgestaltet ist und ein Abscheideteil (41) mit einem Reservoir (42) aufweist, wobei am Abscheideteil (41) ein tangentialer Eingang (44) und ein mittiger Ausgang (45) sowie am Reservoir (42) ein unterer Ausgang (46) für die abgeschiedene Flüssigkeit ausgestaltet sind und wobei das Reservoir (42) mit einer Füllstandüberwachung (47) ausgestattet und durch ein zusätzliches Reservoir (43) erweiterbar ist.
